# EUROPEAN PATENT SPECIFICATION

(11) **EP 3 832 272 B1**
(45) Date of publication and mention of the grant of the patent: **28.06.2023**
(21) Application number: 20208510.6
(22) Date of filing: 18.11.2020
(51) Int. Cl.: G01H 3/00, F16K 37/00, G01H 11/08, G01H 1/00

(54) **CAVITATION SENSING UNIT FOR PROVIDING A CAVITATION SENSING SIGNAL AND BEING ADAPTED TO BE CONNECTED TO A CONTROL VALVE OF A HYDRODYNAMIC SYSTEM**
KAVITATIONSABTASTEINHEIT ZUR ERZEUGUNG EINES KAVITATIONSABTASTSIGNALS, DIE AN EIN STEUERVENTIL EINES HYDRODYNAMISCHEN SYSTEMS ANGESCHLOSSEN WERDEN KANN
UNITÉ DE DÉTECTION DE CAVITATION POUR FOURNIR UN SIGNAL DE DÉTECTION DE CAVITATION ET CONÇUE POUR ÊTRE RELIÉE À UNE SOUPAPE DE COMMANDE D'UN SYSTÈME HYDRODYNAMIQUE

(30) Priority: 02.12.2019 DK PA201901409
(43) Date of publication of application: 09.06.2021
(73) Proprietor: Danfoss A/S, 6430 Nordborg (DK)
(72) Inventor: SUSIC, Egon, 6430 Nordborg (DK); SAVSEK, Pavel, 6430 Nordborg (DK); POZAR, Tomaz, 6430 Nordborg (DK); PETKOVSEK, Rok, 6430 Nordborg (DK)
(74) Representative: Elmer, Henrik

(56) References cited:
- JP-A- H07 325 005
- US-A1- 2003 019 297
- US-A1- 2014 182 381
- US-A1- 2015 059 886

## Description

The invention relates to a cavitation sensing unit for providing a cavitation sensing signal and being adapted to be connected to a control valve of a hydrodynamic system.

Cavitation can occur in hydrodynamic systems if a fluid pressure drops in a hydrodynamic flow.

The pressure drop causes small bubbles in the hydrodynamic flow. The bubbles may implode if the pressure rises. The implosion may cause damage to material in the immediate surrounding of the imploding bubble. This may lead to material erosion at wall areas confining the hydrodynamic flow, mechanical vibrations and noise. For example, cavitation may disturb the function of control valves or destroy them. Cavitation sensors are used to avoid or counteract the effects of cavitation. Those sensors may detect the mechanical vibrations and/or the noise being caused by cavitation. The control valve may then be actuated based on the sensor signals.

From WO 2018/210640 A1, it is known to provide a valve with a processor and a cavitation sensor connected to the processor. The valve comprises a housing, wherein the cavitation sensor is attached to an outer surface of the housing of the valve or to an outer surface of the housing of an actuating element of the valve.

Document US 2003/0019297 A1 describes a diagnostic system for a valve, comprising a cavitation sensing unit installed in the body of the valve, said cavitation sensing unit comprising a mechanical filter having at two opposite sides a piezoelectric element and an electric component.

There is a need to provide an improved device which has a more robust design and a simpler handling.

Thus, the technical object may be providing an improved device for detecting cavitation in a hydrodynamic system, the device being more independent than in the prior art.

The main features of the invention and further embodiments are as indicated in the claims.

In an aspect of the invention, the present invention introduces a cavitation sensing unit configured to be acoustically connected to a control valve, said cavitation sensing unit comprising:
a frame body having an elongated shape defining a longitudinal direction, said frame body including a waveguide beam element having a first surface attached to an acoustic transducer and a second surface, opposite to said first surface, attached to a printed circuit board, and a second connecting partner, arranged on one extremity of said frame body, and configured to be inserted into a housing of the body of said control valve, and acoustically connected to an inner chamber inside the housing of the body of said control valve,
the cavitation sensing unit being characterized in that:
   said a wave-guide beam element extends along said longitudinal direction of the elongated frame body away from the second connecting partner.

The second connecting partner may connect to the external of said housing, and may only partly reaches into said housing, the housing thus forming part of the acoustic connection.

In an embodiment a first opening is formed in the waveguide beam element to enable a data exchange and/or power supply connection between said acoustic transducer positioned and acoustic sensor.

The cavitation sensing unit may have a first connecting partner where the first connecting partner and the second connecting partner are configured to connect to each other in an acoustically coupling manner, wherein a acoustic coupling element comprises the first connecting partner and wherein the frame body comprises the second connecting partner.

The invention provides a device which implements a cavitation sensing unit a control valve of a hydrodynamic system. The control valve may be connected to an actuator that is configured to actuate the control valve according to signals of the cavitation sensing unit. In this manner, the actuator may actuate the control valve in a manner to reduce or avoid cavitation. The detection of the cavitation in the control valve is performed by the cavitation sensing unit which provides the cavitation sensing signals. The cavitation sensing unit is arranged to detect cavitation in an inner chamber of the housing of the control valve. This means, the cavitation sensing unit is embedded in connection to the control valve such that the cavitation sensing unit is an integral component of the control valve. The connection between the cavitation sensing unit and the housing is acoustically coupling. Furthermore, the housing provides an acoustically coupling connection between the cavitation sensing unit and the control valve. The acoustic coupling element may be a sensor nest for the cavitation sensing unit. Furthermore, the acoustic coupling element improves the acoustic coupling between the housing and the cavitation sensing unit. The acoustic coupling element may comprise a housing surface and a sensor surface. The housing surface may be configured such that it can be attached to the housing of the control valve. The sensor surface may comprise a means to connect a cavitation sensing unit to the acoustic coupling element.

Furthermore, the cavitation sensing unit comprises a frame body and a connecting element having a first connecting partner and a second connecting partner, wherein the first connecting partner and the second connecting partner are configured to connect to each other in an acoustically coupling manner, wherein the acoustic coupling element comprises the first connecting partner and wherein the frame body comprises the second connecting partner.

The means for connecting the sensor surface to the cavitation sensing unit may be the connecting element. The first connecting partner may be connected to the second connecting partner when attaching the cavitation sensing unit to the acoustic coupling element. For example, the first connecting partner may be a bore having a threaded inner wall, wherein the second connecting partner may be a rod having a threaded outer surface. In this example, the cavitation sensing unit may be screwed into the acoustic coupling element to connect the cavitation sensing unit to the acoustic coupling element. The frame body may provide a frame for the cavitation sensing unit which acts as an acoustic bridge between the acoustic coupling element in the cavitation sensing unit.

Thus, the acoustic waves resulting from cavitation in the control valve may travel via the housing to the cavitation sensing unit. The cavitation sensing unit may detect the acoustic waves to determine the cavitation in the control valve. The invention therefore provides an improved device for detecting cavitation in a hydrodynamic system. The control valve comprising the cavitation sensing unit is more independent than the devices of the prior art since the invention does not require any sensors to be attached to the control valve, directly. The control valve according to the invention is therefore autonomous. Consequently, the control valve does not need to be prepared for any attachment of a cavitation sensing unit. The connection between the control valve and the actuator is sufficient for actuating the control valve in a manner that avoids or reduces cavitation. Furthermore, this reduces the costs of the control valve and the installation of the control valve in the hydrodynamic system.

Furthermore, the cavitation sensing unit comprises an acoustic sensor element, wherein the frame body comprises a waveguide beam element extending along a longitudinal direction of the frame body away from the second connecting partner, wherein the acoustic sensor element is attached to the waveguide beam element. For example, the acoustic sensor element comprises a lead zirconate titanate (PZT) foil, that extends along the waveguide beam element.

By attaching the acoustic sensor element of the cavitation sensing unit to the waveguide beam element of the frame body, and acoustic bridge is formed between the control valve and the acoustic sensor element by the acoustic coupling element and the waveguide beam element. Furthermore, the waveguide beam element supports the acoustic sensor element in the cavitation sensing unit.

In a further example, the cavitation sensing unit may comprise a body shield extending around the frame body, the body shield connecting to the frame body, wherein at least one sealing element is arranged between the body shield and the frame body.

The body shield protects the inside of the cavitation sensing unit. For example, the body shield may protect the frame body or the acoustic sensor element from dirt and moisture in the inner chamber. The sensor element between the body shield and the frame body improves the protection from dirt and moist.

Furthermore, the cavitation sensing unit may for example comprise an electronic filter element for filtering the cavitation sensing signal.

The electronic filter element may process of the cavitation sensing signal being provided by the cavitation sensing unit. Thus, the filtering of the cavitation sensing signal is directly performed in the cavitation sensing unit.

In another or additional example, the cavitation sensing unit may comprise an electronic amplifier element for amplifying the cavitation sensing signal.

In this example, the cavitation sensing signal is amplified within the cavitation sensing unit by the electronic amplifier element. Consequently, the amplification of the cavitation sensing signal is performed within the cavitation sensing unit. The electronic amplifier element may be combined with the filter element.

Furthermore, the cavitation sensing unit may for example comprise a printed circuit board comprising circuit elements being configured to form an electronic amplifier element and/or an electronic amplifier element.

The printed circuit board is therefore configured to comprise the electronic filter element and/or the electronic amplifier element. The frame body of the cavitation sensing unit may comprise notches which hold the printed circuit board. The printed circuit board may therefore be directly embedded in the cavitation sensing unit.

In a further example, the cavitation sensing unit may comprise an electric connector, preferably a DIN-connector, for connecting the cavitation sensing unit to the actuator, the electric connector comprising a power connector and a signal connector for providing the cavitation sensing signal.

Thus, a one cable connection between the cavitation sensing unit and the actuator may be provided. This reduces the space required for cables.

In an example, not forming part of the present invention a cavitation sensing unit for providing a cavitation sensing signal is provided, the cavitation sensing unit being configured to be arranged in an inner chamber of a housing of an actuator for a control valve of a hydrodynamic system, wherein the cavitation sensing unit is configured to be connected to the housing in an acoustically coupling manner.

The effects and further embodiments of the cavitation sensing unit according to the present example are analogous to the effects and embodiments of the cavitation sensing unit according to the description mentioned above. Thus, it is referred to the above description of the device.

In a further aspect of the invention a control valve having a housing with an inner chamber is provided, the control valve further comprising a cavitation sensing unit according to the description mentioned above, the cavitation sensing unit being arranged in the inner chamber and connected to the housing in an acoustically coupling manner.

The effects and further embodiments of the control valve according to the present invention are analogous to the effects and embodiments of the cavitation sensing unit according to the description mentioned above. Thus, it is referred to the above description of the device.

In an example, not forming part of the present invention an actuator having a housing with an inner chamber is provided, the actuator further comprising a cavitation sensing unit according to the description mentioned above, the cavitation sensing unit being arranged in the inner chamber and connected to the housing in an acoustically coupling manner.

The effects and further embodiments of the actuator according to the present example are analogous to the effects and embodiments of the cavitation sensing unit according to the description mentioned above. Thus, it is referred to the above description of the device.

Further features, details and advantages of the invention result from the wording of the claims as well as from the following description of exemplary embodiments based on the drawings. The figures show:
- Fig. 1: a schematic drawing of a hydrodynamic system with a control valve and an actuator;
- Fig. 2: a schematic drawing of components of the cavitation sensing unit;
- Fig. 3a, b: a schematic drawing of further components of the cavitation sensing unit;
- Fig. 4: a schematic drawing of the cavitation sensing unit; and
- Fig. 5: a schematic drawing of the cavitation sensing unit attached to an actuator.

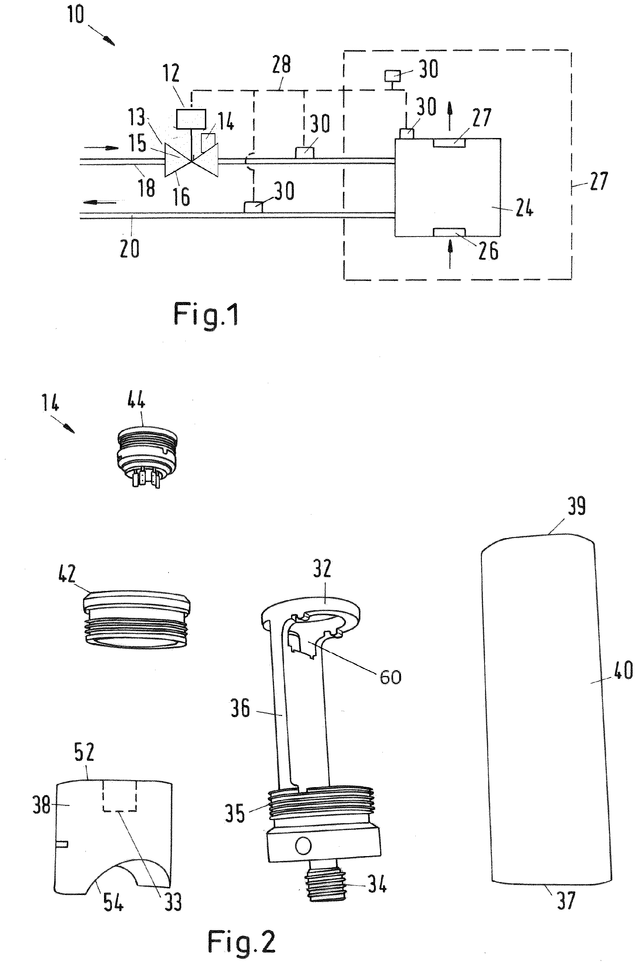

Fig. 1 shows a hydrodynamic system which in its entirety is referenced by reference number 10.

The hydrodynamic system 10 is a heat exchanger system having a heat exchanger 24 being arranged in the room 22. The heat exchanger 24 comprises a water inlet 18 and a water outlet 20. Furthermore, the heat exchanger 24 comprises an air inlet 26 and an air outlet 27. Heat is exchanged between the water and the airstream through the heat exchanger 24. The water inlet 18 comprises a control valve 16 which is actuated by actuator 12 for controlling the water inflow. The actuator 12 is connected to the control valve 16 for actuating it. The actuator 12 actuates the control valve 16 by using temperature sensors 30, which may be arranged to the water inlet 18, to the water outlet 20, to the heat exchanger 24, and/or in the room 22.

Furthermore, a cavitation sensing unit 14 is positioned in connection to the control valve 16. The cavitation sensing unit 14 may provide measured data on possible sensed cavitation to a controller or to the actuator 12 to control the control valve 16 such to avoid or reduce cavitation in the control valve 16. The control valve 16 further comprises a housing 13 enclosing an inner chamber 15. The cavitation sensing unit 14 may be connected to the housing 13 such as by a winding connection. The contact between the housing 13 and the cavitation sensing unit 14 is such that the housing 13 and the cavitation sensing unit 14 are acoustically coupled. This means, that acoustic waves can travel at least from the housing 13 to the cavitation sensing unit 14 ensuring the cavitation sensing unit 14 to be in acoustic contact to the inner chamber 15.

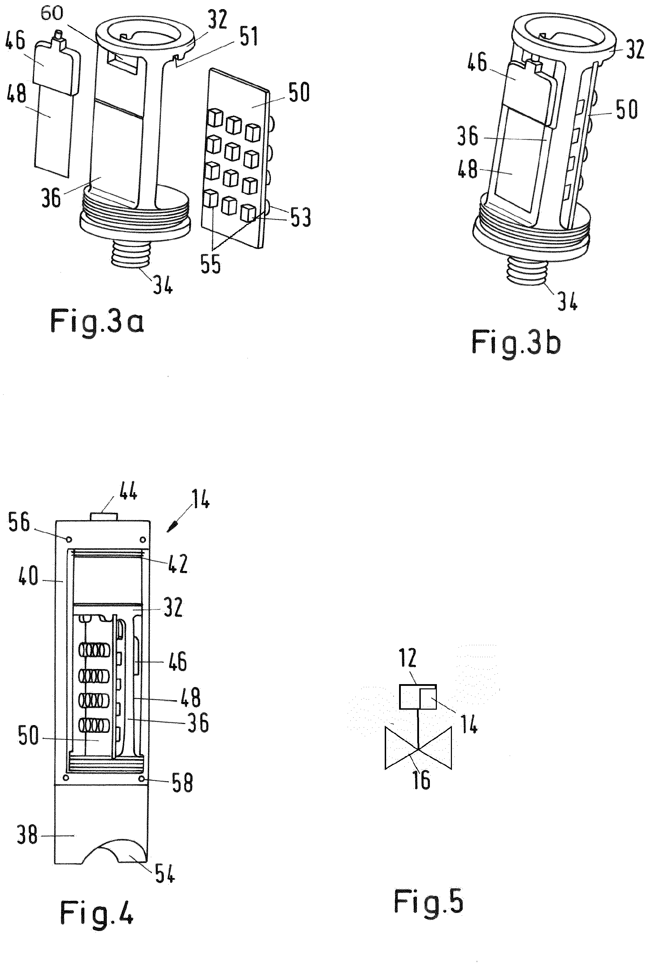

In an example, not forming part of the present invention, as shown in fig. 5, the cavitation sensing unit 14 is arranged in an inner chamber 15' of a housing 13' of the actuator 12 where the actuator 12 is acoustically coupled to the control valve 16. For example, acoustic waves may travel from the control valve 16 to the housing 13 of the control valve 16 via a stem and a neck connecting the control valve 16 and the actuator 12. The housing 13' and the components of the control valve 16 connected to the actuator 12 therefore form an acoustic bridge between the control valve 16 and the actuator 12. Consequently, the cavitation sensing unit 14 is acoustically coupled to the control valve 16.

Fig. 2 shows the non-electronic components of the cavitation sensing unit 14. The cavitation sensing unit 14 comprises a frame body 32, an acoustic coupling element 38, a body shield 40, a cap 42, and a connector 44, such as a DIN connector, though any other suitable connector would also apply, e.g. USB.

The body shield 40 comprises a lower end 37 and an upper end 39. The length of the body shield 40 may be in the range of 50 mm to 200 mm, preferably 100 mm. The diameter of the body shield 40 may be in the range of 10 to 50 mm, preferably 34 mm. The upper end 39 comprises an inner thread which may interact with an outer thread of the cap 42. Thus, the 42 can be connected to the body shield 40.

The cap 42 may receive the DIN-connector 44 for connecting the cavitation sensing unit 14 to electronics and power sources being connected to or arranged at the control valve 16. The DIN-connector 44 provides a one-cable connection for signal cables and power cables. The supply voltage of a power source being connected to the DIN-connector 44 may for example be 24 V DC. The DIN-connector 44 may be a DIN-Amphenol-connector.

The body shield 40 comprises a further inner thread at the lower end 37 which may interact with an outer thread 35 of the frame body 32. Thus, the frame body 32 can be entered into the body shield 40 and connected to the body shield 40 by screwing.

The frame body 32 can be connected to the acoustic coupling element 38 by a connection element having a first connecting partner 33 and a second connecting partner 34. The first connecting partner 33 is arranged on the acoustic coupling element 38. In this example, the first connecting partner 33 is a bore comprising a threaded wall. The second connecting partner 34 is arranged on the frame body 32. In this example, the second connecting partner 34 is a rod having an outer thread which may interact with the inner thread of the first connecting partner 33. This means, the first connecting partner 33 and the second connecting partner 34 may be connected to each other by screwing. E. g., the second connecting partner 34 may be an M12 screw.

The acoustic coupling element 38 comprises a frame body surface 52 and a housing surface 54. The frame body surface 52 is adapted to be attached to the frame body 32. The housing surface 54 is adapted to the shape of the housing 13 at the point of connection of the cavitation sensing unit 14 to the housing 13.

The acoustic coupling element 38 in the illustrated embodiment is formed having an essentially flat section and a first opening 60. In the shown embodiment the waveguide beam element 36 is sandwiched between the acoustic transducer 48 and printed circuit board 50, where the acoustic transducer 48 e.g. is positioned at the first side and the printed circuit board 50 at the second side of the waveguide beam element 36. Either, or both, of the acoustic transducer 48 and printed circuit board 50 may be in contact to the waveguide beam element 36.

The acoustic transducer 48 and acoustic sensor element 46 is in data communication and/or power supply contact through the first opening 60, which may be positioned at an upper end of the waveguide beam element (36) seen in relation to the second connecting partner 34. The communication may be directly between the acoustic transducer 48 and acoustic sensor element 46, or may be by the connector 44, such as a DIN connector,

Furthermore, the frame body 32 comprises a waveguide beam element 36. The function of the waveguide beam elements 36 is explained in figures 3a and 3b.

Fig. 3a shows further electronic components of the cavitation sensing unit 14 which are to be attached to the frame body 32. The cavitation sensing unit 14 further comprises a printed circuit board 50 and an acoustic sensor element 46 comprising e.g. a lead zirconate titanate (PZT) foil 48. The acoustic sensor element 46 is attached to the frame body 32, wherein the PZT foil 48 extends along the waveguide beam element 36. Furthermore, the acoustic sensor element 46 may provide cavitation sensing signals for the actuator 12. The attachment of the PZT foil 48 to the waveguide beam element 36 may be performed by glue.

The printed circuit board 50 may comprise electronic circuits forming an electronic filter element 53 for filtering the cavitation sensing signals from the acoustic sensor element 46. Further electronic circuits of the printed circuit board 50 may form an electronic amplifier element 55 which may amplify the cavitation sensing signal from the acoustic sensor element 46. The output of the electronic amplifier element 55 may be 0 to 10 V.

The electronic filter element 53 and electronic amplifier element 55 may be positioned at opposite surfaces of the printed circuit board 50 relative to each other.

The printed circuit board 50 may be attached to the frame body 32 by notches 51. In this example, the printed circuit board 50 extends parallel to the waveguide beam element 36.

Fig. 3b shows the acoustic sensor element 46 and the printed circuit board 50 being attached to the frame body 32.

Fig. 4 shows the complete cavitation sensing unit 14. The frame body 32 with the mounted acoustic sensor element 46 and the printed circuit board 50 is introduced and connected into the body shield 40. A sealing element 58 is arranged between the body shield 40 and the frame body 32. Furthermore, the cap 42 is screwed into the body shield 40. A further sealing element 56 is arranged between the body Shield 40 and the cap 42.

The DIN-connector 44 is also attached to the cap 42 and connects power cables and signal cables to the printed circuit board 50 and the acoustic sensor element 46. Furthermore, the sensor nest 38 is attached to the frame body 32 with the frame body surface 52.

The invention is not limited to one of the aforementioned embodiments. It can be modified in many ways as defined in the appended claims.

## Claims

1. Cavitation sensing unit (14) configured to be acoustically connected to a control valve (16), said cavitation sensing unit (14) comprising:
a frame body (32) having an elongated shape defining a longitudinal direction, said frame body including a waveguide beam element (36) having a first surface attached to an acoustic transducer (48) and a second surface, opposite to said first surface, attached to a printed circuit board (50), and a second connecting partner (34), arranged on one extremity of said frame body, and configured to be inserted into a housing of the body of said control valve (16), and
acoustically connected to an inner chamber (15) inside the housing (13) of the body of said control valve (16),
the cavitation sensing unit being **characterized in that**: said a wave-guide beam element (36) extends along said longitudinal direction of the elongated frame body (32) away from the second connecting partner (34).

2. Cavitation sensing unit (14) according to claim 1, wherein the second connecting partner (34) is configured to reach only partly to said housing (13), the housing (13) thus forming part of the acoustic connection.

3. Cavitation sensing unit (14) according to any of claims 1 or 2, where a first opening (60) formed in the waveguide beam element (36) is configured to enable a data exchange and/or power supply connection between said acoustic transducer (48) and printed circuit board (50).

4. Cavitation sensing unit (14) according to any of the previous claims, said cavitation sensing unit (14) further comprising an acoustic coupling element (38) comprising a first connecting partner (33), wherein the first connecting partner (33) and the second connecting partner (34) are configured to connect to each other in an acoustically coupling manner.

5. Cavitation sensing unit (14) according any of the previous claims, wherein the acoustic transducer is a lead PZT ceramic zirconate titanate foil (48), that extends along the waveguide beam element (36).

6. Cavitation sensing unit (14) according to any of the previous claims, wherein the cavitation sensing unit (14) comprises a body shield (40) extending around the frame body (32), the body shield (40) connecting to the frame body (32), wherein at least one sealing element (56, 58) is arranged between the body shield (40) and the frame body (32).

7. Cavitation sensing unit (14) according to any of the previous claims, wherein the cavitation sensing unit (14) comprises an electronic filter element (53) for filtering the cavitation sensing signal.

8. Cavitation sensing unit (14) according to any of the previous claims, wherein the cavitation sensing unit (14) comprises an electronic amplifier element (55) for amplifying the cavitation sensing signal.

9. Cavitation sensing unit (14) according to claim 7 or 8, wherein the printed circuit board (50) comprises circuit elements being configured to provide an electronic filter element (53) and/or an electronic amplifier element (55).

10. Cavitation sensing unit (14) according to any of the previous claims, wherein the cavitation sensing unit (14) comprises an electric connector, preferably a DIN-connector (44), configured to connect the cavitation sensing unit (14) to the actuator (12), the electric connector comprising a signal connector configured to provide the cavitation sensing signal and a power connector.

11. Control valve having a housing (13) with an inner chamber (15), the control valve (16) further comprising a cavitation sensing unit (14) according to one of claims 1 to 10, the cavitation sensing unit (14) being arranged in the inner chamber (15) and connected to the housing (13) in an acoustically coupling manner.

## Patentansprüche

1. Kavitationserkennungseinheit (14), die dafür ausgelegt ist, akustisch mit einem Regelventil (16) verbunden zu werden, wobei die Kavitationserkennungseinheit (14) umfasst:
einen Rahmenkörper (32) mit einer länglichen Form, der eine Längsrichtung definiert, wobei der Rahmenkörper ein Wellenleiter-Strahlelement (36) mit einer ersten Fläche, die an einem Akustikwandler (48) befestigt ist, und einer zweiten Fläche, gegenüber der ersten Fläche, die an einer Leiterplatte (50) befestigt ist, aufweist, und einen zweiten Verbindungspartner (34), der an einem Ende des Rahmenkörpers angeordnet und dafür ausgelegt ist, in ein Gehäuse des Körpers des Regelventils (16) eingesetzt zu werden, und der akustisch mit einer inneren Kammer (15) innerhalb des Gehäuses (13) des Körpers des Regelventils (16) verbunden ist,
wobei die Kavitationserkennungseinheit **dadurch gekennzeichnet ist, dass**:
sich das Wellenleiter-Strahlelement (36) entlang der Längsrichtung des länglichen Rahmenkörpers (32) vom zweiten Verbindungspartner (34) weg erstreckt.

2. Kavitationserkennungseinheit (14) gemäß Anspruch 1, wobei der zweite Verbindungspartner (34) dafür ausgelegt ist, nur teilweise bis zu dem Gehäuse (13) zu reichen, wobei das Gehäuse (13) somit einen Teil der akustischen Verbindung bildet.

3. Kavitationserkennungseinheit (14) gemäß einem der Ansprüche 1 oder 2, wobei eine erste Öffnung (60), die in dem Wellenleiter-Strahlelement (36) ausgebildet ist, dafür ausgelegt ist, eine Datenaustausch- und/oder Stromversorgungsverbindung zwischen dem Akustikwandler (48) und der Leiterplatte (50) zu ermöglichen.

4. Kavitationserkennungseinheit (14) gemäß einem der vorstehenden Ansprüche, wobei die Kavitationserkennungseinheit (14) ferner ein Akustikkopplerelement (38) umfasst, das einen ersten Verbindungspartner (33) umfasst, wobei der erste Verbindungspartner (33) und der zweite Verbindungspartner (34) dafür ausgelegt sind, mittels akustischer Kopplung miteinander verbunden zu werden.

5. Kavitationserkennungseinheit (14) gemäß einem der vorstehenden Ansprüche, wobei der Akustikwandler eine Blei-PZT-Keramik-Zirkonat-Titanat-Folie (48) ist, die sich entlang des Wellenleiter-Strahlelements (36) erstreckt.

6. Kavitationserkennungseinheit (14) gemäß einem der vorstehenden Ansprüche, wobei die Kavitationserkennungseinheit (14) eine Körperabschirmung (40) umfasst, die sich um den Rahmenkörper (32) herum erstreckt, wobei die Körperabschirmung (40) mit dem Rahmenkörper (32) verbunden ist, wobei wenigstens ein Dichtungselement (56, 58) zwischen der Körperabschirmung (40) und dem Rahmenkörper (32) angeordnet ist.

7. Kavitationserkennungseinheit (14) gemäß einem der vorstehenden Ansprüche, wobei die Kavitationserkennungseinheit (14) ein elektronisches Filterelement (53) zum Filtern des Kavitationserkennungssignals umfasst.

8. Kavitationserkennungseinheit (14) gemäß einem der vorstehenden Ansprüche, wobei die Kavitationserkennungseinheit (14) ein elektronisches Verstärkerelement (55) zum Verstärken des Kavitationserkennungssignals umfasst.

9. Kavitationserkennungseinheit (14) gemäß Anspruch 7 oder 8, wobei die Leiterplatte (50) Schaltungselemente umfasst, die dafür ausgelegt sind, ein elektronisches Filterelement (53) und/oder ein elektronisches Verstärkerelement (55) bereitzustellen.

10. Kavitationserkennungseinheit (14) gemäß einem der vorstehenden Ansprüche, wobei die Kavitationserkennungseinheit (14) einen elektrischen Steckverbinder, vorzugsweise einen DIN-Steckverbinder (44), umfasst, der dafür ausgelegt ist, die Kavitationserkennungseinheit (14) mit dem Betätigungselement (12) zu verbinden, wobei der elektrische Anschluss einen Signalverbinder, der dafür ausgelegt ist, das Kavitationserkennungssignal bereitzustellen, und einen Stromsteckverbinder umfasst.

11. Regelventil, ein Gehäuse (13) mit einer inneren Kammer (15) aufweisend, wobei das Regelventil (16) ferner eine Kavitationserkennungseinheit (14) gemäß einem der Ansprüche 1 bis 10 umfasst, wobei die Kavitationserkennungseinheit (14) in der inneren Kammer (15) angeordnet und mit dem Gehäuse (13) mittels akustischer Kopplung verbunden ist.

## Revendications

1. Unité de détection de cavitation (14) conçue pour être connectée acoustiquement à une soupape de commande (16), ladite unité de détection de cavitation (14) comprenant :
un corps de cadre (32) ayant une forme allongée définissant une direction longitudinale, ledit corps de cadre comprenant un élément de faisceau de guide d'onde (36) ayant une première surface fixée à un transducteur acoustique (48) et une seconde surface, opposée à ladite première surface, fixée à une carte de circuit imprimé (50), et un second élément associé de connexion (34), disposé sur une extrémité dudit corps de cadre, et configuré pour être inséré dans un logement du corps de ladite soupape de commande (16), et connecté acoustiquement à une chambre interne (15) à l'intérieur du logement (13) du corps de ladite soupape de commande (16),
l'unité de détection de cavitation étant **caractérisée en ce que** :
ledit élément de faisceau guide d'onde (36) s'étend le long de ladite direction longitudinale du corps de cadre allongé (32) à l'écart du second élément associé de connexion (34) .

2. Unité de détection de cavitation (14) selon la revendication 1, dans laquelle le second élément associé de connexion (34) est conçu pour n'atteindre que partiellement ledit logement (13), le logement (13) faisant ainsi partie de la connexion acoustique.

3. Unité de détection de cavitation (14) selon l'une quelconque des revendications 1 ou 2, dans laquelle une première ouverture (60) formée dans l'élément de faisceau de guide d'onde (36) est configurée pour permettre une connexion d'échange de données et/ou d'alimentation électrique entre ledit transducteur acoustique (48) et la carte de circuit imprimé (50).

4. Unité de détection de cavitation (14) selon l'une quelconque des revendications précédentes, ladite unité de détection de cavitation (14) comprenant en outre un élément de couplage acoustique (38) comprenant un premier élément associé de connexion (33), dans lequel le premier élément associé de connexion (33) et le second élément associé de connexion (34) sont configurés pour se connecter l'un à l'autre au moyen d'un couplage acoustique.

5. Unité de détection de cavitation (14) selon l'une quelconque des revendications précédentes, dans laquelle le transducteur acoustique est une feuille de titano-zirconate de plomb, PZT, céramique (48), qui s'étend le long de l'élément de faisceau de guide d'onde (36).

6. Unité de détection de cavitation (14) selon l'une quelconque des revendications précédentes, dans laquelle l'unité de détection de cavitation (14) comprend un blindage de corps (40) s'étendant autour du corps de cadre (32), le blindage de corps (40) se raccordant au corps de cadre (32), dans laquelle au moins un élément d'étanchéité (56, 58) est disposé entre le blindage de corps (40) et le corps de cadre (32).

7. Unité de détection de cavitation (14) selon l'une quelconque des revendications précédentes, dans laquelle l'unité de détection de cavitation (14) comprend un élément de filtrage électronique (53) pour filtrer le signal de détection de cavitation.

8. Unité de détection de cavitation (14) selon l'une quelconque des revendications précédentes, dans laquelle l'unité de détection de cavitation (14) comprend un élément d'amplification électronique (55) pour amplifier le signal de détection de cavitation.

9. Unité de détection de cavitation (14) selon la revendication 7 ou 8, dans laquelle la carte de circuit imprimé (50) comprend des éléments de circuit étant configurés pour fournir un élément de filtrage électronique (53) et/ou un élément d'amplification électronique (55).

10. Unité de détection de cavitation (14) selon l'une quelconque des revendications précédentes, dans laquelle l'unité de détection de cavitation (14) comprend un connecteur électrique, de préférence un connecteur DIN (44), configuré pour connecter l'unité de détection de cavitation à l'actionneur (12), le connecteur électrique comprenant un connecteur de signal configuré pour fournir le signal de détection de cavitation et un connecteur d'alimentation.

11. Soupape de commande comportant un logement (13) doté d'une chambre interne (15), la soupape de commande (16) comprenant en outre une unité de détection de cavitation (14) selon l'une des revendications 1 à 10, l'unité de détection de cavitation (14) étant disposée dans la chambre interne (15) et connectée au logement (13) au moyen d'un couplage acoustique.
